# EUROPÄISCHE PATENTSCHRIFT

(11) **EP 0 807 049 B1**
(45) Veröffentlichungstag und Bekanntmachung des Hinweises auf die Patenterteilung: **15.03.2000**
(21) Anmeldenummer: 95942088.6
(22) Anmeldetag: 09.12.1995
(51) Int. Cl.: B62D 5/083

(54) **LENKVENTIL MIT GESCHLOSSENER MITTE**
STEERING VALVE WITH CLOSED CENTRE
SOUPAPE DE BRAQUAGE A CENTRE FERME

(43) Veröffentlichungstag der Anmeldung: 19.11.1997
(73) Patentinhaber: TRW Fahrwerksysteme GmbH & Co. KG, 40547 Düsseldorf (DE)
(72) Erfinder: SPILLNER, Robert, D-40476 Düsseldorf (DE); PRITCHARD, Geoffrey, Wrington, Bristol BS18 7PR (GB)
(74) Vertreter: Stenger, Watzke & Ring Patentanwälte
(86) Internationale Anmeldenummer: EP9504852
(87) Internationale Veröffentlichungsnummer: WO9721578

(56) Entgegenhaltungen:
- WO-A-88/01959
- DE-A- 2 426 201
- DE-A- 2 834 421
- DE-C- 4 437 168

## Beschreibung

Die Erfindung betrifft ein Lenkventil mit geschlossener Mitte zur Versorgung eines Stellgliedes mit Hydraulikdruck, bestehend aus einer Eingangswelle, einer Ausgangswelle, einem torsionselastischen Element, das mit einem Ende mit der Eingangswelle und dem anderen Ende mit der Ausgangswelle verbunden ist, einer Steuerdruck-Schalteinrichtung und einer Drehmoment/Axialkraft-Wandlereinheit.

Lenkventile der gattungsgemäßen Art werden insbesondere in ServoLenksystemen eingesetzt. Der Aufbau derartiger Servolenksysteme ist an sich bekannt. Eine mit einer Lenkstange verbundene Eingangswelle ist mit einer mit einem Ritzel versehenen Ausgangswelle verbunden. In bekannter Weise kann den beiden Wellen ein torsionselastisches Element, beispielsweise ein Torsionsstab zwischengeschaltet sein. Das Ritzel wirkt auf die Zahnstange einer Lenkung. Für derartige Lenksysteme ist die Verwendung von Lenkventilen bekannt. Dazu ist eine Steuerdruck-Schalteinrichtung vorgesehen, welche beispielsweise eine mit der Ausgangswelle in Eingriff stehende und die Eingangswelle umgebende Ventilhülse sein kann. Von einer Pumpe wird Hydraulikflüssigkeit durch das System gepumpt. Bei einer relativen Verdrehung der Eingangswelle zur Ventilhülse wird Hydraulikdruck einem Hydrauiikmotor zugeführt, welcher die Zahnstangenbewegung in eine der möglichen Richtungen unterstützt.

In Servolenksystemen eingesetzte Lenkventile werden grob in zwei Gruppen unterschieden. Ein in Servolenksystemen eingesetzter Typ von Lenkventilen ist das Lenkventil mit sogenannter offener Mitte. In Neutralstellung des Lenkventils mit offener Mitte wird von der Pumpe Hydraulikflüssigkeit mit einem niedrigen Druck durch das offene Ventil in ein Reservoir gepumpt. Eine relative Verdrehung der Eingangswelle zur Ventilhülse bewirkt die Erhöhung des Druckes, welcher dann dem Servomotor zugeführt wird. Der Nachteil von Lenkventilen mit offener Mitte ist, daß auch in Neutralstellung ein ständiger Hydraulikfluß aufrecht erhalten werden muß. Es ist somit einer Verlustleistung vom Antriebsmotor zu erbringen, die sich in erster Linie aus dem Staudruck und dem Volumenstrom herleitet.

Ein derartiges Lenkventil, welches abgesehen von der offenen Mitte alle gattungsgemäßen Merkmale aufweist, ist in der DE 43 17 818 C1 offenbart. Als Drehmoment/Axialkraft-Wandlereinheit ist ein Reaktionskolben mit einem elektrohydraulischen Wandler EHW eingesetzt.

Eine Servolenkung für Kfz. mit einem Lenkventil mit offener Mitte ist aus der DE 24 26 201 A1 bekannt, wobei aus Zwecken der Baugrößenminimierung, nicht jedoch mit Blick auf den Dichtungsverschleiß im Torsionselement eine hydraulikführende Leitung ausgebildet ist.

Schließlich offenbart die DE 27 58 321 A1 ein Lenkventil mit offener Mitte, bei dem eine Axialbohrung durch die Eingangswelle geführt ist.

Ein anderer in Servolenksystemen eingesetzter Typ von Lenkventilen ist das Lenkventil mit sogenannter geschlossener Mitte. Durch die geschlossene Mittelstellung ist der Hydraulikfluß zu den beiden Zylinderseiten in Neutralstellung des Lenkventils unterbrochen. Damit findet in Neutralstellung auch kein Hydraulikfluß statt. Von einer Pumpe wird ein Betriebsdruck an das praktisch geschlossene Ventil angelegt, welcher bei Ventilöffnung von der dann in Betrieb genommenen Pumpe in vorgegebenen Grenzen lediglich aufrecht erhalten werden muß. Wegen der auch bei Nichtbetätigung der Lenkung mit Lenkventilen mit offener Mitte auftretenden Verlustleistung sind bei Betrachtung der Leistung die Lenkventile mit geschlossener Mitte in Neutralstellung des Lenkventils überlegen. Diese haben jedoch den Nachteil, daß praktisch keine direkte Zuordnung zwischen einem Eingangsmoment und einem Arbeitsdruck im Zylinder stattfindet. Daher werden im Stand der Technik zusätzliche Maßnahmen ergriffen, um der Bedienperson eine Beziehung zwischen der einzugebenden Lenkkraft und dem resultierenden Hydraulikdruck bereitzustellen. Herkömmliche Sitzventilanordnungen sind nicht unproblematisch, da die Sitzventile einem gewissen Verschleiß unterliegen, und einen hohen Fertigungs- und Montageaufwand erfordern. Darüber hinaus stellen sie der Bedienperson ein Schwellmoment entgegen.

Aus der DE 28 34 421 A1 ist ein Lenkventil der gattungsgemäßen Art mit geschlossener Mitte bekannt. Dieses weist eine Drehmoment-/Axialkraft-Wandlereinheit auf und eine mit einem Sitzventil verschlossene Axialbohrung zur Hydraulikdruckführung. Dieses zusätzliche Sitzventil erhöht nicht nur als zusätzliches Bauteil den Herstellungs- und Montageaufwand, es ist auch anfällig und sorgt für Geräusche.

Das besondere Problem der Lenkventile mit geschlossener Mitte hinsichtlich der mangelnden Zuordnung zwischen dem Eingangsmoment und einem Arbeitsdruck im Zylinder äußert sich in dem allgemein als kritisch einzustufenden Anlenkverhalten. Aufgrund der Tatsache, daß die Hydraulikflüssigkeit permanent unter maximalem Systemdruck an der Steuerdruck-Schalteinrichtung ansteht, ergibt sich eine sehr hohe Dynamik bei der Betätigung der Steuerdruck-Schalteinrichtung, da es schlagartig zu Systemdruckauswirkungen kommt.

Davon ausgehend liegt der vorliegenden Erfindung die **Aufgabe** zugrunde, ein Lenkventil mit geschlossener Mitte der gattungsgemäßen Art dahingehend weiterzubilden, daß die Ansprechdynamik erheblich verbessert ist, das Lenkventil einfach und wirtschaftlich herstellbar, kompakt und in seiner Arbeitsweise zuverlässig ist.

Zur technischen **Lösung** wird vorgeschlagen, daß das Lenkventil wenigstens eine Axialbohrung zur Hydraulik-Druckführung aufweist, welche an einem Ende mit einem durch die Drehmoment/Axialkraft-Wandlereinheit gegen den Hydraulikdruck belasteten Ventil verschlossen ist.

Die Drehmoment/Axialkraft-Wandlereinheit bei Lenkventilen mit geschlossener Mitte bewirkt, daß ein über die Eingangwelle aufgebrachtes Drehmoment beispielsweise gegen ein federelastisches Element in eine Änderung einer Axialkraft umgewandelt wird. Ein durch die Wandlereinheit gegen den Hydraulikdruck belastetes Ventil öffnet somit nicht schlagartig, sondern in Abhängigkeit vom Drehmoment, von der Federcharakteristik des federelastischen Elementes und von der Drehmoment/Axialkraft-Wandlereinheit. Damit ist es möglich, die Ansprechdynamik durch eine Druckregelung erheblich zu verbessern.

In vorteilhafter Weise ist das Ventil ein Sitzventil. Ein derartiges Sitzventil kann an einem Ende einer Axialbohrung eine vollständige Abdichtung bewirken. Leckageverluste können damit nahezu vollständig vermieden werden. In vorteilhafter Weise weist die Drehmoment/Axialkraft-Wandlereinheit einen Steuerschieber auf. Ein Steuerschieber bietet die Möglichkeit, die Wandlereinheit nicht nur mit der Kraft eines federelastischen Elementes zu belasten, sondern auch mit entsprechend geführten Hydraulikdrücken. In vorteilhafter Weise wirkt der Steuerschieber mit einer Kugelkupplung zusammen, um eine Wandlung zwischen Drehmoment und Axialkraft zu erreichen. Gemäß einem Vorschlag der Erfindung wirkt die Kugelkupplung mit einem mit dem Sitzventil zusammenwirkenden Steuerschieber zusammen. In vorteilhafter Weise ist der Steuerschieber in einer Axialbohrung in der Eingangswelle angeordnet. Durch die erfindungsgemäße Ausgestaltung wird ermöglicht, daß der Steuerschieber durch eine Schraubenfeder belastet wird. Über den Steuerschieber wird eine der Kugelkupplungshälften entsprechend belastet. Zwischen den mit Kugelkalotten versehenen Kugelkupplungshälften sind Kugeln angeordnet, so daß bei Einleitung eines Drehmomentes zunächst die Kraft der Schraubenfeder überwunden werden muß, damit die beiden Kugelkupplungshälften sich aufgrund der aus den Senken herausdrückenden Kugeln voneinander wegbewegen können. In vorteilhafter Weise ist auch die Schraubenfeder in der in der Eingangswelle angeordneten Axialbohrung untergebracht. Durch die Integration der einzelnen Elemente der Wandlereinheit beispielsweise in Axialbohrungen in der Eingangswelle wird eine kompakte Bauweise des Lenkventils gewährleistet.

Mit Vorteil wird vorgeschlagen, daß das Sitzventil gegenüber dem Reaktionskolben mit einem Axialspiel angeordnet ist. In vorteilhafter Weise ist das Sitzventil relativ zum Steuerschieber federbelastet angeordnet. Somit kann das Sitzventil innerhalb des Axialspiels relativ zum Steuerschieber Bewegungen ausüben, und zwar unabhängig von der aufgrund der Drehmoment/Hydraulikdruck-Verhältnisse gegebenen Ventilposition. Nach Spielausgleich wird die Druckregelung durch die starre Kopplung unterbrochen und es stellt sich die maximale Servounterstützung im Lenkventil ein.

In vorteilhafter Weise ist in der Axialbohrung zwischen dem Sitzventil und dem Steuerschieber ein Steuerraum ausgebildet. So lange das Sitzventil geschlossen ist, liegt in dem Steuerraum nur Tankdruck an. Bei Öffnen des Sitzventils baut sich in dem Steuerraum ein Druck auf, der über entsprechende Leitungen, Bohrungen und dergleichen einem Hydraulikmotor zugeführt wird.

In vorteilhafter Weise ist der Steuerraum mit Radialbohrungen verbunden. Die Steuerdruck-Schalteinrichtung umfaßt in vorteilhafter Weise eine die Eingangswelle umgebende Ventilhülse, so daß die Radialbohrungen vom Steuerdruck in den Bereich zwischen Eingangswelle und Ventilhülse führen.

In vorteilhafter Weise ist die Axialbohrung in einem beweglichen Element des Servolenkventils ausgebildet. Gemäß einem Vorschlag der Erfindung ist die Axialbohrung axial durch die Ausgangswelle geführt. Zusätzlich wird vorgeschlagen, die Axialbohrung durch die Eingangswelle zu führen. Um Leckageverluste zu vermeiden und Bauhöhe einzusparen, wird zusätzlich vorgeschlagen, die Axialbohrung durch das torsionselastische Element zu führen, welches zweckmäßigerweise ein Torsionsrohr ist.

Durch die erfindungsgemäße Ausgestaltung wird die Ansprechdynamik eines Lenkventils mit geschlossener Mitte erheblich verbessert. Zu diesem Zwecke wird eine integrierte Druckregelung vorgeschlagen. Durch die Verwendung eines mit einer Axialbohrung zusammenwirkenden Sitzventils werden Leckageverluste in der Neutralstellung des Ventils vermieden. Daraus ergibt sich eine Kostensenkung bei der Herstellung des Ventils, da gegenüber herkömmlichen Ventilen weniger Bauteile verwendet werden müssen. Durch die Kopplung des Sitzventils mit der Drehmoment/Axialkraft-Wandlereinheit ergibt sich eine Regelung des Zylinderdrucks in Abhängigkeit des Verdrehwinkels der Eingangswelle. Dadurch wird die Ventilkennlinie einfach einstellbar, da die Federsteifigkeit des federelastischen Elementes leicht geändert werden kann. Bei einer in einer Axialbohrung in die Eingangswelle eingesetzten Schraubenfeder kann deren Federverspannung variiert werden, indem die Feder durch eine in die Bohrung eingesetzte Verstellschraube eingestellt werden kann. Die Verstellschraube arbeitet mit einer Dichtung zusammen. Die Wandlereinheit stellt darüber hinaus eine Zentriereinrichtung zur Mittenzentrierung dar. Durch die Änderung des freien Axialspiels zwischen Sitzventil und Steuerschieber läßt sich der jeweilige Abschneidpunkt der Ventilkennlinie einstellen. Der Steuerschieber wirkt seinerseits mit der Kugelkupplung zusammen.

Durch die Verwendung eines Torsionsrohrs kann vom äußeren Ende eine von außen zugängliche Hydraulikdruck-Zuleitung durch das Torsionsrohr, durch die Ausgangswelle bis in die Eingangswelle hineingeführt werden. Dadurch entfallen ansonsten benötigte Dichtungen zwischen Eingangs- und Ausgangswelle, was zu einer entscheidenden Reduzierung der Reibung führt. Das Torsionsrohr wird in vorteilhafter Weise in der Ausgangswelle am äußeren Ende fixiert und über eine bestimmte Länge verdrehbar in eine Bohrung mit gegenüber dem Außendurchmesser vergrößerten Innendurchmesser gelagert. Während bei herkömmlichen Lenkventilen die Torsionstäbe üblicherweise in der Eingangswelle angeordnet sind, muß diese eine Mindestlänge aufweisen, um die Torsionscharakteristik des Torsionsstabes zu gewährleisten. Durch die erfindungsgemäße Anordnung des Torsionsrohres in der Ausgangswelle kann die Eingangswelle entsprechend verkürzt werden. Daher weist das erfindungsgemäße Lenkventil gegenüber herkömmlichen Ventilen eine erheblich verkleinerte Bauhöhe auf, was einen besonderen Aspekt der vorliegenden Erfindung darstellt.

Durch die aufgrund der Verwendung des Sitzventils erreichte Leckagefreiheit kann die positive Überdeckung der Steuerkanten verkleinert werden, wodurch die dynamischen Eigenschaften des Ventils erheblich verbessert werden können. Schließlich ist ein besonderer Vorteil des erfindungsgemäßen Ventils, daß es nach beiden Steuerseiten hin symmetrisch, daß heißt mit jeweils nur einem federelastischen Element pro Lenkseite ausgebildet ist. Somit ist ein plötzlicher einseitiger Druckaufbau beim Ausfall der Federn ausgeschlossen.

Weitere Vorteile und Merkmale der Erfindung ergeben sich aus der folgenden Beschreibung anhand der Figuren. Dabei zeigen:

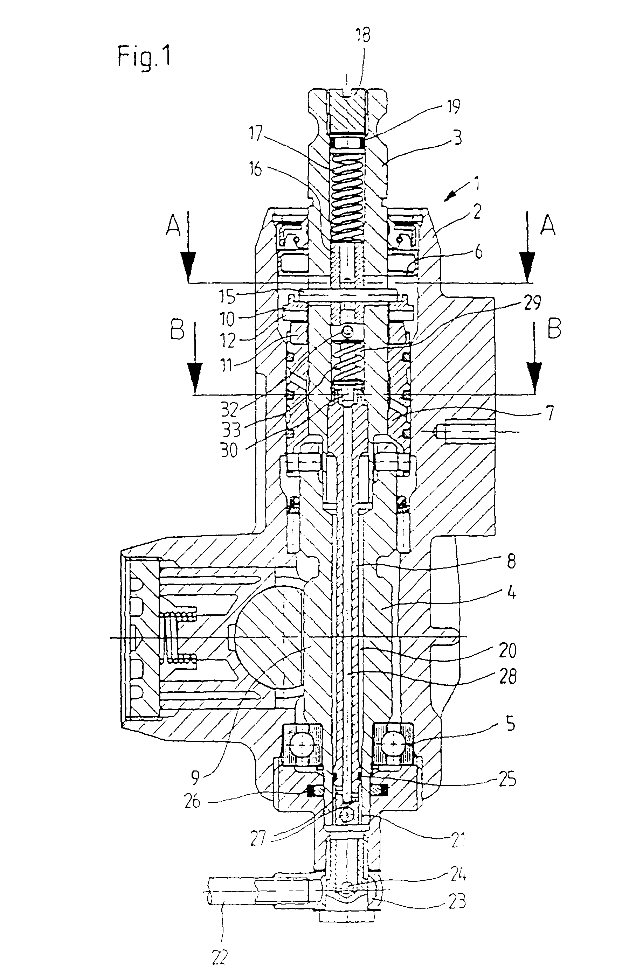

- Fig. 1: eine Schnittdarstellung eines Ausführungsbeispiels eines Lenkventils;
- Fig. 2: eine Schnittansicht entlang der Linie A-A gemäß Fig. 1;
- Fig. 3: eine schematische Seitenansicht eines Ausführungsbeispiels für einen Drehmoment/Axialkraft-Wandler;
- Fig. 4: eine Schnittansicht entlang der Linie B-B gemäß Fig. 1 und
- Fig. 5a bis c: diagrammartige Darstellungen der Ventilkennlinieneinstellungen.

Das in den Figuren dargestellte Lenkventil 1 umfaßt ein Gehäuse 2, in welches eine Eingangswelle 3 und eine Ausgangswelle 4 mittels Lagern bzw. Dichtungen 5, 6 eingesetzt sind. Die Eingangswelle 3 ist von einer Ventilhülse 7 umgeben. Die Ventilhülse 7 ist mit der Ausgangswelle 4 verdrehfest verbunden. Die Eingangswelle 3 ist mit der Ausgangswelle 4 über das Torsionsrohr 8 verbunden, so daß es zu einer relativen Verdrehung zwischen Eingangswelle 3 und Ausgangswelle 4 und damit auch Ventilhülse 7 kommen kann. Die Ausgangswelle 4 ist mit einem Ritzel 9 versehen, welches mit einer Zahnstange einer nicht weiter dargestellten Lenkung zusammenwirkt.

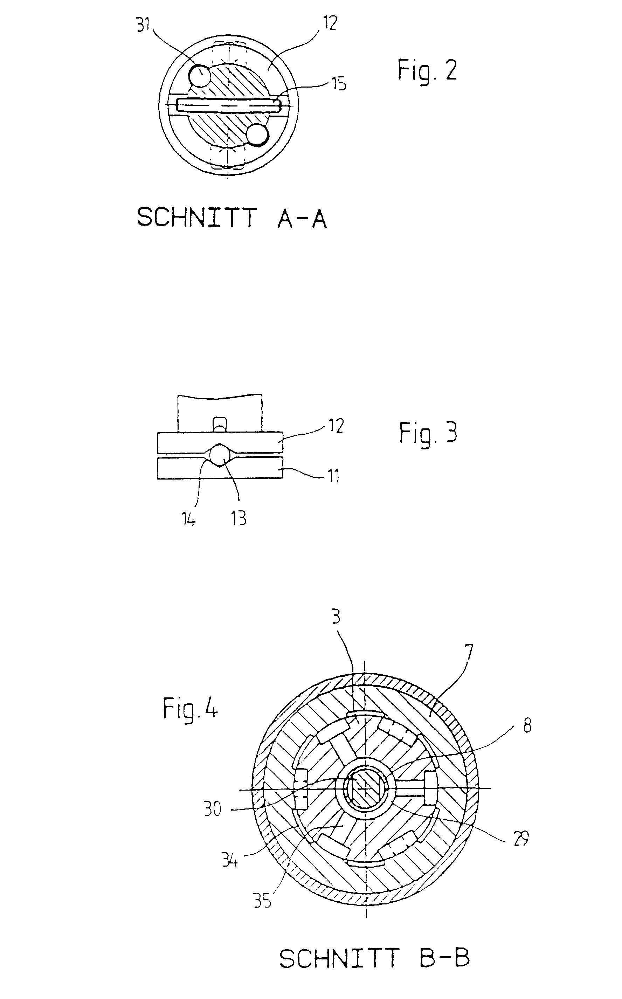

Im Bereich des stirnseitigen Endes der Ventilhülse 7 ist ein Drehmoment/Axialkraft-Wandler 10 angeordnet. Wie auch den Darstellungen in den Figuren 2 und 3 zu entnehmen ist, besteht der Wandler aus zwei Kupplungsscheiben 11, 12, in welchen sogenannte schräge Ebenen 14 ausgebildet und in die Kugeln 13 eingesetzt sind. Wird nun die eine Kupplungsscheibe relativ zu anderen verdreht, bewirken die Kugeln 13 im Zusammenwirken mit den schrägen Ebenen 14, daß die beiden Kupplungsscheiben 11, 12 axial voneinander wegbewegt werden. Je nach Federbelastung wird eine Kopplung zwischen dem wirkenden Drehmoment und der Axialbewegung hergestellt. Im gezeigten Ausführungsbeispiel ist die Kupplungsscheibe 12 mit einem Stift 15 verbunden, welcher seinerseits in einer Radialbohrung in der Eingangswelle 3 axialverschieblich ist. Weiterhin ist der Stift 15 mit einem in einer zentralen Axialbohrung in der Eingangswelle 3 angeordneten Steuerschieber 16 verbunden, welcher zusammen mit dem Stift 15 innerhalb der Eingangswellenbohrung axialbeweglich ist. Das stirnseitige Ende des Steuerschiebers 16 wird durch eine Schraubenfeder 17 beaufschlagt, die zwischen einer das freie Ende der Eingangswelle 3 verschließenden Einstellschraube 18 und der Stirnseite des Steuerschiebers 16 angeordnet ist. Zwischen der Schraubenfeder 17 und der Einstellschraube 18 ist darüber hinaus eine Dichtung 19 angeordnet. Die Federvorspannung läßt sich somit über die Einstellschraube 18 einstellen.

Die sich im gezeigten Ausführungsbeispiel über die gesamte Länge des Lenkventils 1 erstreckende Axialbohrung 20 besteht aus der Axialbohrung 21 in der Ausgangswelle, der Axialbohrung 28 im Torsionsrohr und der Axialbohrung 29 in der Eingangswelle. Eine von außen an das Lenkventil 1 herangeführte Hydraulikleitung 22 ist mittels einer Ringgelenkleitung 23 an die Axialbohrung 20 angeschlossen. Zu diesem Zweck ist in einem Anschlußstück eine Radialbohrung 24 ausgebildet. Das Anschlußstück ist in der Ringleitung 23 angeordnet. Dichtungen 25, 26 dichten den unteren Anschlußbereich gegenüber dem Gehäuseinneren und gegenüber der Axialbohrung ab. Der Hydraulikdruck kann somit bis in die Axialbohrung 21 der Ausgangswelle 4 im untersten Bereich geführt werden. Über Radialbohrungen 27 wird der Hydraulikdruck weiterhin bis in die Axialbohrung 28 im Torsionsrohr 8 geführt. Durch die Axialbohrung 28 im Torsionsrohr wird der Druck bis an das obere freie Ende geführt.

Bei dem gezeigten Ausführungsbeispiel ist der Durchmesser des Torsionsrohres 8 kleiner als der Innendurchmesser der Axialbohrung 21 in der Ausgangswelle, mit Ausnahme des Befestigungsbereiches, in welchem auch die Dichtung 25 ausgebildet ist. Durch diese Maßnahmen kann die Torsionselastizität des Torsionsrohres innerhalb der Ausgangswelle erreicht werden. Gegenüber herkömmlichen Ventilen kann somit die Eingangswelle erheblich verkürzt werden, was einer Verkürzung des Lenkventils 1 zuträglich ist.

Am freien Ende des Torsionsrohres 8 ist diese mit der Eingangswelle 3 verbunden. Zu diesem Zwecke ist das Torsionsrohr in die Axialbohrung 29 der Eingangswelle 3 eingesetzt. Gleichzeitig ist in die Axialbohrung 29 in der Eingangswelle 3 ein Sitzventil 30 angeordnet, welches mit dem Steuerschiebers 16 federelastisch gekoppelt ist. Im gezeigten Ausführungsbeispiel besteht die Verbindung zwischen dem Sitzventil 30 und dem Steuerschieber 16 in einer Axialspielbefestigung 32, so daß das Sitzventil 30 relativ zu dem Steuerschieber 16 im Rahmen des Spiels axialbeweglich ist. Innerhalb des Spiels ist das Sitzventil 30 über die Feder 33 elastisch gekoppelt. Der Raum zwischen dem unteren Ende des Steuerschiebers 16 und dem Federteller des Sitzventils 30 ist der sogenannte Steuerraum, welcher über Radialbohrungen 35 mit den Steuernuten 34 in der Ventilhülse 7 in Verbindung steht. Dies ergibt sich am besten aus dem Schnitt in Figur 4.

Rein mechanisch betrachtet funktioniert das gezeigte Lenkventil 1 wie folgt:

Ein auf die Eingangswelle 3 wirkendes Drehmoment bewirkt, daß die Kupplungsscheibe 12 des Drehmoment/Axialkraft-Wandlers 10 über die vertikalen Kugeln bewegt wird, wodurch das Drehmoment zwischen den beiden Kupplungsscheiben 11, 12 der Feder 17 entgegenwirkt. Somit ist eine Mittenzentrierung gegeben, bis das Drehmoment die Kraft der Feder 17 übersteigt, so daß eine Relativverdrehung zwischen der Eingangswelle 3 und der Ausgangswelle 4 und damit auch der Ventilhülse 7 stattfinden kann. Maßgeblich dafür ist auch die Torsionssteifigkeit des Torsionsrohres 8.

Hydraulisch stellt sich folgende Funktion ein:

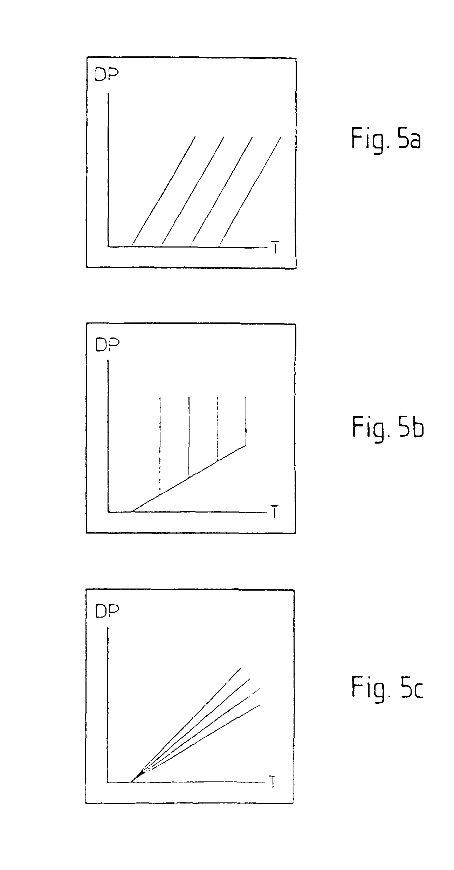

So lange nicht gelenkt wird, daß heißt so lange auf die Eingangswelle 3 kein Drehmoment wirkt, sind die beiden Kolbenseiten des Steuerschiebers 16 über die Steuerbohrungen mit dem Tank verbunden, das heißt es herrscht Tankdruck. Das Sitzventil 30 verschließt die Axialbohrung 28 im Torsionsrohr leckagefrei. Dies begünstigt die Ausbildung kleinerer positiver Überdeckungen im Bereich der Steuernuten, wodurch die dynamischen Eigenschaften des Lenkventils 1 verbessert werden. Mit der Einleitung eines Drehmomentes über die Eingangswelle wird zunächst die beschriebene Mittenzentrierung des Ventils überwunden, die in erster Linie durch die Federkraft der Feder 17 und den Wandler 10 erreicht wird. Anschließend kommt es zu einer Relativverdrehung von der Eingangswelle 3 gegenüber der Ventilhülse 7 und oberhalb der Ansprechschwelle des Lenkventils wird das Sitzventil 30 durch die Reduzierung der Vorspannung der Feder 33 und gegen den anstehenden Speicherdruck geöffnet. Zum Beginn der Öffnung fließt ein kleiner Volumenstrom in den Steuerraum, in welchem sich nun der Druck erhöht. Der Steuerdruck korrespondiert gleichzeitig auch mit der Rückseite des Sitzventils und erzeugt eine Axialkraft proportional zur Fläche der Druckbohrung und des Steuerraumdruckes. Der Druck steigt so lange an, bis die Axialkraft das Sitzventil wieder schließt und die ursprüngliche Schließkraft erreicht ist. Das bedeutet, daß entsprechend einer Drehbewegung der Eingangswelle in den Zylinder kontinuierlich ein Steuerdruck eingeregelt wird, so daß es zu keinerlei Unstetigkeiten im Anlenkbereich kommt. Durch die Variation der Federsteifigkeit der Feder 33 läßt sich jede gewünschte Ventilkennlinie einstellen. In Figur 5 sind Diagramme gezeigt, bei welchen die Änderungen des Druckes über dem Drehmoment aufgetragen sind.

Durch die Einstellschraube 18 läßt sich die Schraubenfeder 17 variieren, wodurch die in Figur 5a gezeigte Mittenzentrierung verstellt werden kann. Je nach eingestellter Vorspannung der Feder 17 kann das zu überwindende Drehmoment eingestellt werden, ab welchem das Sitzventil 30 öffnet und Druckänderungen erzielt werden.

Durch die Variation der Federsteifigkeit der Feder 33 zwischen Steuerschieber 16 und Sitzventil 30 läßt sich die Steigung der Druckänderung gemäß Figur 5c einstellen. Das von einer Bedienperson eingegebene Drehmoment ist dabei proportional zum jeweiligen Zylinderdruck. Damit können Lenkverhalten erzielt werden, die Lenkventilen mit hydraulischer Rückführung entsprechen. Die Rückwirkung der Servolenkung wird mit einer rein mechanisch wirkenden Lenkung vergleichbar.

Im Parkierbereich ist es wünschenswert, daß die maximale Handkraft vom Lenksystem begrenzt wird. Nach Ausgleich des Spiels zwischen Sitzventil 30 und Steuerschieber 16 wird die Kopplung zwischen dem Sitzventil und dem Steuerschieber starr. Durch die Spielvariation läßt sich somit die sogenannte Abschneidung variieren, wie sie in Figur 5b gezeigt ist. Bei Erreichen des jeweiligen eingestellten Punktes wird die Druckregelung unterbunden und es stellt sich der maximale Systemdruck auf der jeweiligen Kolbenseite ein.

Das beschriebene Ausführungsbeispiel dient nur der Erläuterung der Erfindung, ohne diese auf die konkrete Ausführungsform zu beschränken. Insbesondere sind die Lage der Axialbohrungen und die Kopplung des Verschlußventiles mit dem Wandler, ebenso wie die Ausführungsform des Wandlers im Rahmen der Erfindung variabel.

### Bezugszeichenliste

- 1: Lenkventil
- 2: Gehäuse
- 3: Eingangswelle
- 4: Ausgangswelle
- 5: Lager
- 6: Lager
- 7: Ventilhülse
- 8: Torsionsrohr
- 9: Ritzel
- 10: Drehmoment/Axialkraft-Wandler
- 11: Kupplungsscheibe
- 12: Kupplungsscheibe
- 13: Kugeln
- 14: schräge Ebene
- 15: Stift
- 16: Steuerschieber
- 17: Schraubenfeder
- 18: Einstellschraube
- 19: Dichtung
- 20: Axialbohrung
- 21: AxialbohrungAusgangswelle
- 22: Hydraulikleitung
- 23: Ringleitung
- 24: Bohrung
- 25: Dichtung
- 26: Dichtung
- 27: Radialbohrung
- 28: Axialbohrung Torsionsrohr
- 29: Axialbohrung Eingangswelle
- 30: Sitzventil
- 31: vertikale Kugeln
- 32: Axialspielbefestigung
- 33: Feder
- 34: Steuernuten
- 35: Radialbohrungen

## Patentansprüche

1. Lenkventil mit geschlossener Mitte zur Versorgung eines Stellgliedes mit Hydraulikdruck, bestehend aus einer Eingangswelle (3), einer Ausgangswelle (4), einem torsionselastischen Element, das mit einem Ende mit der Eingangswelle und dem anderen Ende mit der Ausgangswelle verbunden ist, einer Steuerdruck-Schalteinrichtung und einer Drehmoment-Axialkraft-Wandlereinheit,
**dadurch gekennzeichnet,**
daß das Lenkventil (1) wenigstens eine Axialbohrung (20) zur Hydraulikdruckführung aufweist, welche an einem Ende mit einem durch die Drehmoment/Axialkraft-Wandlereinheit (10) gegen den Hydraulikdruck belasteten Ventil verschlossen ist.

2. Lenkventil nach Anspruch 1, dadurch gekennzeichnet, daß das Ventil ein Sitzventil (30) ist.

3. Lenkventil nach einem der vorhergehenden Ansprüche, dadurch gekennzeichnet, daß der Drehmoment/Axialkraft-Wandler (10) einen Steuerschieber (16) aufweist.

4. Lenkventil nach einem der vorhergehenden Ansprüche, dadurch gekennzeichnet, daß der Drehmoment/Axialkraft-Wandler (10) eine Kugelkupplung umfaßt.

5. Lenkventil nach einem der vorhergehenden Ansprüche, dadurch gekennzeichnet, daß der Drehmoment/Axialkraft-Wandler mit einem Steuerschieber (16) verbunden ist.

6. Lenkventil nach Anspruch 5, dadurch gekennzeichnet, daß der Steuerschieber (16) in einer Axialbohrung (29) in der Eingangswelle (3) angeordnet ist.

7. Lenkventil nach einem der Ansprüche 5 oder 6, dadurch gekennzeichnet, daß der Steuerschieber (16) federbelastet ist.

8. Lenkventil nach Anspruch 7, dadurch gekennzeichnet, daß zur Federbelastung des Steuerschiebers (16) eine Schraube (17) in die Axialbohrung (29) der Eingangswelle (3) eingesetzt ist.

9. Lenkventil nach einem der vorhergehenden Ansprüche, dadurch gekennzeichnet, daß das Ventil (30) an dem Steuerschieber (16) mittels einer Axialspielbefestigung angeordnet ist.

10. Lenkventil nach Anspruch 9, dadurch gekennzeichnet, daß das Ventil (30) gegenüber dem Steuerschieber (16) federbelastet ist.

11. Lenkventil nach einem der vorhergehenden Ansprüche, dadurch gekennzeichnet, daß im Bereich des Ventils (30) in der Axialbohrung (29) in der Eingangswelle (3) ein Steuerraum ausgebildet ist.

12. Lenkventil nach Anspruch 11, dadurch gekennzeichnet, daß der Steuerraum mit Radialbohrungen (35) verbunden ist.

13. Lenkventil nach einem der vorhergehenden Ansprüche, dadurch gekennzeichnet, daß der Steuerraum mit der Steuerdruck-Schalteinrichtung verbunden ist.

14. Lenkventil nach einem der vorhergehenden Ansprüche, dadurch gekennzeichnet, daß die Steuerdruck-Schalteinrichtung eine Ventilhülse (7) umfaßt.

15. Lenkventil nach einem der vorhergehenden Ansprüche, dadurch gekennzeichnet, daß die Axialbohrung in einem der beweglichen Elemente des Lenkventils (1) ausgebildet ist.

16. Lenkventil nach einem der vorhergehenden Ansprüche, dadurch gekennzeichnet, daß die Axialbohrung axial durch die Ausgangswelle (4) geführt ist.

17. Lenkventil nach einem der vorhergehenden Ansprüche, dadurch gekennzeichnet, daß die Axialbohrung durch die Eingangswelle (3) geführt ist.

18. Lenkventil nach einem der vorhergehenden Ansprüche, dadurch gekennzeichnet, daß die Axialbohrung durch das torsionselastische Element geführt ist.

19. Lenkventil nach einem der vorhergehenden Ansprüche, dadurch gekennzeichnet, daß das torsionselastische Element über den größten Teil seiner Länge in einer Axialbohrung (21) in der Ausgangswelle (4) angeordnet ist.

20. Lenkventil nach einem der vorhergehenden Ansprüche, dadurch gekennzeichnet, daß wenigstens eines der Federelemente einstellbar ist.

## Claims

1. Steering valve with closed centre for supplying an actuator with hydraulic pressure, comprising an input shaft (3), an output shaft (4), a torsionally flexible element connected at one end to the input shaft and at the other end to the output shaft, a control pressure switching device and a torque-to-axial force converter unit,
characterized in
that the steering valve (1) comprises at least one axial bore (20) for carrying hydraulic pressure, which is closed at one end by a valve, which is loaded counter to the hydraulic pressure by the torque-to-axial force converter unit (10).

2. Steering valve according to claim 1, characterized in that the valve is a seat valve (30).

3. Steering valve according to one of the preceding claims, characterized in that the torque-to-axial force converter unit (10) comprises a control slide valve (16).

4. Steering valve according to one of the preceding claims, characterized in that the torque-to-axial force converter unit (10) comprises a ball-shaped coupling.

5. Steering valve according to one of the preceding claims, characterized in that the torque-to-axial force converter unit (10) is connected to a control slide valve (16).

6. Steering valve according to claim 5, characterized in that the control slide valve (16) is disposed in an axial bore (29) in the input shaft (3).

7. Steering valve according to one of claims 5 or 6, characterized in that the control slide valve (16) is spring-loaded.

8. Steering valve according to claim 7, characterized in that, for spring loading of the control slide valve (16), a screw (17) is inserted into the axial bore (29) of the input shaft (3).

9. Steering valve according to one of the preceding claims, characterized in that the valve (30) is disposed by means of an end play fastening on the control slide valve (16).

10. Steering valve according to claim 9, characterized in that the valve (30) is spring-loaded relative to the control slide valve (16).

11. Steering valve according to one of the preceding claims, characterized in that a control chamber is formed in the region of the valve (30) in the axial bore (29) in the input shaft (3).

12. Steering valve according to claim 11, characterized in that the control chamber is connected to radial bores (35).

13. Steering valve according to one of the preceding claims, characterized in that the control chamber is connected to the control pressure switching device.

14. Steering valve according to one of the preceding claims, characterized in that the control pressure switching device comprises a valve sleeve (7).

15. Steering valve according to one of the preceding claims, characterized in that the axial bore is formed in one of the movable elements of the steering valve (1).

16. Steering valve according to one of the preceding claims, characterized in that the axial bore extends axially through the output shaft (4).

17. Steering valve according to one of the preceding claims, characterized in that the axial bore extends through the input shaft (3).

18. Steering valve according to one of the preceding claims, characterized in that the axial bore extends through the torsionally flexible element.

19. Steering valve according to one of the preceding claims, characterized in that the torsionally flexible element over the greatest part of its length is disposed in an axial bore (21) in the output shaft (4).

20. Steering valve according to one of the preceding claims, characterized in that at least one of the spring elements is adjustable.

## Revendications

1. Vanne de braquage à centre fermé servant à alimenter un organe de réglage avec une pression hydraulique, consistant en un arbre d'entrée (3) un arbre de sortie (4) un élément élastique de torsion, qui est relié à une extrémité à l'arbre d'entrée et à l'autre extrémité à l'arbre de sortie, un système de branchement de la pression de commande, et une unité de conversion du couple de torsion en une force axiale, caractérisée en ce que la vanne de braquage (1) présente au moins un alésage axial (20) pour amener la pression hydraulique, alésage qui est fermé à une extrémité par une soupape comprimée par l'unité de conversion du couple de torsion en une force axiale à l'encontre de la pression hydraulique.

2. Vanne de braquage selon la revendication 1, caractérisée en ce que la vanne est une vanne à siège (30).

3. Vanne de braquage selon l'une des revendications précédentes, caractérisée en ce que le convertisseur du couple de torsion en une force axiale (10) présente un tiroir de commande (16).

4. Vanne de braquage selon l'une des revendications précédentes, caractérisée en ce que le convertisseur du couple de torsion en une force axiale (10) comprend une attache à bille.

5. Vanne de braquage selon l'une des revendications précédentes, caractérisée en ce que le convertisseur du couple de torsion en une force axiale (10) est relié à un tiroir de commande (16).

6. Vanne de braquage selon la revendication 5, caractérisée en ce que le tiroir de commande (16) est disposé dans un alésage axial (29) dans l'arbre d'entrée (3).

7. Vanne de braquage selon l'une des revendications 5 ou 6,
caractérisée en ce que le tiroir de commande (16) est comprimé par un ressort.

8. Vanne de braquage selon la revendication 7, caractérisée en ce que pour comprimer par un ressort le tiroir de commande (16) on insère une vis (17) dans l'alésage axial (29) de l'arbre d'entrée (3).

9. Vanne de braquage selon l'une des revendications précédentes, caractérisée en ce que la soupape (30) est disposée sur le tiroir de commande (16) au moyen d'une fixation avec un jeu axial.

10. Vanne de braquage selon la revendication 9, caractérisée en ce que la vanne (30) est comprimée par un ressort par rapport au tiroir de commande (16).

11. Vanne de braquage selon l'une des revendications précédentes, caractérisée en ce que l'on constitue dans la zone de la vanne (30) dans l'alésage axial (29) dans l'arbre d'entrée (3) un espace de commande.

12. Vanne de braquage selon la revendication 11, caractérisée en ce que l'espace de commande est relié à des alésages radiaux (35).

13. Vanne de braquage selon l'une des revendications précédentes, caractérisée en ce que l'espace de commande est relié au système de branchement de la pression de commande.

14. Vanne de braquage selon l'une des revendications précédentes, caractérisée en ce que le système de branchement de la pression de commande comprend un manchon de vanne (7).

15. Vanne de braquage selon l'une des revendications précédentes, caractérisée en ce que l'alésage axial est constitué dans l'un des éléments mobiles de la vanne de braquage (1).

16. Vanne de braquage selon l'une des revendications précédentes, caractérisée en ce que l'alésage axial est guidé axialement à travers l'arbre de sortie (4).

17. Vanne de braquage selon l'une des revendications précédentes, caractérisée en ce que l'alésage axial est guidé à travers l'arbre d'entrée (3).

18. Vanne de braquage selon l'une des revendications précédentes, caractérisée en ce que l'alésage axial est guidé à travers l'élément élastique de torsion.

19. Vanne de braquage selon l'une des revendications précédentes, caractérisée en ce que l'élément élastique de torsion est disposé sur la plus grande partie de sa longueur dans un alésage axial (21) dans l'arbre de sortie (4).

20. Vanne de braquage selon l'une des revendications précédentes, caractérisée en ce que l'un au moins des éléments à ressort est réglable.
